# FASCICULE DE BREVET EUROPEEN

(11) **EP 1 567 239 B1**
(45) Date de publication et mention de la délivrance du brevet: **21.05.2008**
(21) Numéro de dépôt: 03789517.4
(22) Date de dépôt: 27.11.2003
(51) Int. Cl.: B01D 1/00

(54) **PROCEDE DE DECOMPOSITION CATALYTIQUE DE N2O EN N2 ET O2 REALISE A HAUTE TEMPERATURE**
VERFAHREN ZUR KATALYTISCHEN ZERSETZUNG VON N20 ZUM N2 UND O2 BEI HOHEN TEMPERATUREN
METHOD FOR THE HIGH-TEMPERATURE CATALYTIC DECOMPOSITION OF N2O INTO N2 AND 02

(30) Priorité: 02.12.2002 FR 0215135
(43) Date de publication de la demande: 31.08.2005
(73) Titulaire: GPN, 92400 Courbevoie (FR); INSTITUT REGIONAL DES MATERIAUX AVANCES (IRMA), 56274 Ploemeur (FR)
(72) Inventeur: HAMON, Christian, F-44600 Saint-Nazaire (FR); DUCLOS, Delphine, F-56520 Guidel (FR)
(74) Mandataire: Killis, Andréas
(86) Numéro de dépôt international: PCT/FR2003/003506
(87) Numéro de publication internationale: WO 2004/052512

(56) Documents cités:
- WO-A-00/00272
- WO-A-97/43214
- US-A- 5 693 299
- US-A1- 2002 123 424
- DATABASE WPI Section Ch, Week 199521 Derwent Publications Ltd., London, GB; Class E36, AN 1995-158064 XP002248207 & JP 07 080317 A (TORAY IND INC), 28 mars 1995 (1995-03-28)
- DATABASE WPI Section Ch, Week 199122 Derwent Publications Ltd., London, GB; Class E36, AN 1991-159845 XP002248208 & JP 03 094817 A (NIPPON SHOKUBAI KAGAKU KOGYO CO LTD), 19 avril 1991 (1991-04-19)

## Description

L'invention a pour objet un procédé de décomposition du N₂O en N₂ et O₂ réalisé à haute température mis en oeuvre en présence d'un catalyseur constitué d'un oxyde mixte de zirconium et de cérium.

Le réchauffement de la planète est aujourd'hui un phénomène largement admis avec, pour cause principale, l'effet de serre provoqué par l'augmentation dans l'atmosphère de la teneur en CO₂ liée à la combustion toujours croissante de matières fossiles.

Outre les émissions de CO₂, d'autres gaz émis en quantités beaucoup plus faibles participent, en raison de leur pouvoir radiatif élevé, également à cet effet de serre. Il s'agit en particulier du méthane (CH₄) et du protoxyde d'azote (N₂O) dont les pouvoirs radiatifs rapportés à celui du CO₂ sont respectivement de 60 et 310. Il convient donc de réduire les émissions générées par le développement industriel. Une part significative de ce protoxyde d'azote d'origine industrielle provient de la fabrication d'acide nitrique par oxydation de l'ammoniac (unité d'acide nitrique).

Dans une unité d'acide nitrique, on oxyde l'ammoniac (NH₃) en NO par de l'air avec des catalyseurs constitués par des toiles de platine. La réaction est effectuée sous une pression de quelques bars, variable selon le type d'unité. Cette réaction est très exothermique et le niveau de température après le passage sur les toiles est très élevé. Pour une température du mélange Air/NH₃ à l'entrée du réacteur d'environ 200°C, elle se situe en sortie de réacteur à une température généralement comprise entre 800 et 900°C.

Lors de l'oxydation en NO, il se forme également de faibles quantités de protoxyde d'azote N₂O. L'effluent gazeux issu du réacteur contient alors du NO, N₂, H₂O et O₂ résiduel ainsi que les faibles quantités de N₂O. L'énergie contenue dans les gaz est récupérée lors du refroidissement par des chaudières avec production de vapeur. Le NO qui est devenu un mélange NO/NO₂ en équilibre, avec NO₂ majoritaire, est ensuite transformé en acide nitrique par absorption dans de l'eau dans une colonne sous pression selon des mécanismes bien connus entraînant la présence dans l'effluent gazeux en sortie de colonne des divers oxydes d'azote NO, NO₂ généralement appelés NOₓ et N₂O. La teneur en NOₓ est fonction des dimensionnements de la colonne et donc de son efficacité.

Dans une étape ultérieure, on traite ledit effluent pour éliminer les NOₓ généralement par réduction catalytique par NH₃. Cette étape est bien connue et largement appliquée à ce jour sur les gaz de queue des unités d'acide nitrique avant la turbine de détente. La température de ces gaz est le plus souvent comprise entre 200 et 250°C.

Le N₂O est très peu soluble dans l'eau et se retrouve donc en quai-totalité à la sortie de la colonne dans ce que l'on appelle les gaz de queue. Pour l'élimination du N₂O, on peut traiter le N₂O avec un catalyseur spécifique sur ces gaz de queue. Ceci fait par exemple l'objet du brevet français déposé le 31 décembre 1997 aux noms des demandeurs et publié sous le N° 2 773 144 mettant en oeuvre un catalyseur à base de zéolithe de type ferriérite échangée au fer. Cependant, ce catalyseur n'est actif qu'à partir de 400°C environ, ce qui nécessite de réchauffer les gaz, et entraîne donc des investissements et consommations d'énergie importantes.

Il est connu que le N₂O se forme au niveau de la première étape du procédé au niveau des toiles de platine. Une solution, a priori économique, consiste à traiter le N₂O directement dans le brûleur, en l'absence donc de composés réducteurs, à la sortie des toiles de platine, par mise en place d'un catalyseur spécifique adapté, ce qui évite des aménagements coûteux et n'entraîne pas de coût énergétique supplémentaire significatif.

Des travaux récents ont été menés sur ce sujet et ont fait l'objet de brevets. On peut citer en particulier l'utilisation d'oxydes mixtes à base de cobalt et de magnésium (demande internationale WO 01/58570 au nom de Krupp Uhde), l'utilisation de spinelles Cu, Zn, Al (demande internationale WO 99/55661 au nom de BASF) ou des catalyseurs à base de zircone (brevet US N° 5,478,549 au nom de DuPont). On note enfin l'utilisation d'oxydes mixtes à base de cobalt et fer sur support de Cérine (CeO₂) éventuellement dopé à la zircone (ZrO₂) (demande internationale WO 02/022230 au nom de Norsk Hydro).

Un catalyseur adapté au procédé doit donc être actif pour la décomposition du N₂O en N₂ et O₂. Dans ce type de procédés de synthèse d'acide nitrique, le volume disponible dans le brûleur après les toiles de platine est réduit ce qui implique de devoir opérer à des vitesses volumétriques horaires (VVH) élevées. En général cette VVH est supérieure à 30 000 h⁻¹ et plutôt comprise entre 50 000 et 80 000 h⁻¹. En conséquence le catalyseur doit permettre d'opérer à ces vitesses volumétriques élevées. Ce catalyseur doit de plus, et c'est là un problème essentiel, être stable dans le temps malgré le niveau de température élevé.

Il existe de nombreux oxydes par exemple MgO et CaO qui permettent de décomposer N₂O avec une bonne efficacité c'est-à-dire un rendement important pour une WH de l'ordre de 10 000 h⁻¹. Ces types d'oxydes ne répondent toutefois pas aux critères qui sont fixés à savoir une très bonne activité à des VVH de l'ordre de 50 000 h⁻¹, voire plus.

Les catalyseurs susceptibles d'être efficaces, tels par exemple la zircone, aux conditions de température et de VVH envisagées présentent cependant l'inconvénient de ne pas être stables dans le temps. La baisse d'activité est vraisemblablement due à des modifications texturales et/ou structurales.

Pour résoudre ce problème, on doit parvenir à une conservation de la structure et de la texture des oxydes constituant le catalyseur, qui se traduit en particulier par la conservation d'une surface spécifique élevée.

La présente invention porte sur des catalyseurs à base d'oxydes de zirconium (Zr) et de cérium (Ce) sous forme de solution solide.

Ceci constitue l'objet de la présente invention.

La présente invention vise un procédé de décomposition du N₂O en N₂ et O₂ réalisé à une température comprise entre 700 et 1000°C qui est mis en oeuvre en présence d'un catalyseur constitué d'un oxyde mixte de zirconium et de cérium se présentant sous forme d'une solution solide.

On entend par solution solide un oxyde mixte de deux éléments, ici le cérium et le zirconium, dans laquelle l'un des éléments s'insère dans la structure cristalline de l'autre oxyde en substitution de l'autre élément en conservant la structure de cet oxyde. Cela se traduit par des spectres de diffraction X identiques, les seules modifications mineures dues à la taille différentes des atomes Zr et Ce, étant les paramètres de mailles et l'intensité de certaines raies de diffraction.

Ces solutions solides peuvent être préparées selon les procédés décrits dans les brevets français publiés sous les numéros suivants : 2 584 388, 2 699 524, 2 701 471 et 2 748 740 au nom de la société Rhône Poulenc Chimie.

Ces documents, notamment les brevets 2 701 471 et 2 748 740 mentionnent l'utilisation de telles solutions solides en catalyse de différentes réactions. Il s'agit notamment du traitement oxydo-réducteur des gaz d'échappement des moteurs à combustion interne qui contiennent divers composés tels que des hydrocarbures brûlés (HC), le CO et des NOₓ, NOₓ désignant le couple NO/NO₂ d'oxydes d'azote en équilibre selon les conditions thermodynamiques du système et qui sont fort différents du protoxyde d'azote N₂O, que cela soit dans le comportement que dans l'incidence au niveau de la pollution.

Les catalyseurs de l'invention présenteront une surface spécifique efficace supérieure à 25 m²/g. Elle sera la plus élevée possible et de préférence supérieure à 30 m²/g. On entend par « surface spécifique efficace », la surface spécifique du catalyseur en régime stationnaire, c'est-à-dire après 1 00 h. de fonctionnement au sein du milieu réactionnel. Cette surface est sensiblement différente de celle du catalyseur neuf. Les surfaces spécifiques du catalyseur neuf seront généralement comprises entre 60 et 150 m²/g. Dans le procédé de l'invention, la surface spécifique «efficace» est liée à la taille des grains et non à leur porosité intrinsèque. Les particules ont, d'une manière générale, tendance à s'agglomérer par phénomène de frittage lorsque le niveau de température est élevé pendant de longues périodes. Il s'ensuit une diminution de la surface spécifique. Dans le procédé de l'invention le phénomène est limité et maîtrisé.

Pour évaluer ces catalyseurs et tester leur efficacité pour la décomposition du N₂O, on ne peut opérer sur de la poudre en raison de la perte de charge qu'elle induit. Cela nécessite donc une mise en forme préalable, par exemple par pastillage. Dans le cas présent, pour les tests effectués à l'échelle laboratoire, on prépare à partir de la poudre des pastilles de 5 mm de diamètre, qui sont ensuite concassées puis tamisées entre 0,5 et 1 mm.

Les catalyseurs de l'invention sont à base d'oxyde de zirconium (ZrO₂) et de cérium (CeO₂) sous forme de solutions solides de ces deux oxydes. Les rapports des teneurs pondérales respectives de ZrO₂ et CeO₂ dans les solutions solides seront généralement compris entre 80/20 et 20/80 et de préférence entre 70/30 et 30/70. Dans le cas où l'un des oxydes est majoritaire, et que la teneur de l'élément minoritaire est en deçà du seuil de solubilité, la solution solide est unique. Dans le cas où le rapport pondéral ZrO₂/CeO₂ est proche de 1, on sera en présence de deux solutions solides.

Les catalyseurs de l'invention peuvent contenir d'autres métaux tels que l'Yttrium à de faibles teneurs de l'ordre de quelques % qui lui conféreront certaines propriétés additionnelles telles que la stabilité thermique avec une meilleure conservation de la structure et de la texture.

### EXEMPLES 1 à 4

Les exemples 1 à 4 ci-après illustrent la mise en oeuvre de ces catalyseurs solides pour la décomposition du N₂O à travers des expériences menées à l'échelle laboratoire sur un gaz reconstitué ayant une composition proche de celle rencontrée après les toiles de platine dans le procédé des unités d'acide nitrique.

Les essais sont menés dans un réacteur à lit fixe traversé de diamètre 1". Le réacteur, en acier réfractaire, est entouré de coquilles chauffantes régulées par PID.

Le mélange réactionnel est préparé à partir d'air sec, d'azote et de bouteilles N₂O/N et NO/N₂.

La teneur en vapeur d'eau est ajustée par un saturateur inox en température (60°C) pour respecter la teneur en eau élevée dans le gaz après les toiles de platine, soit environ 15 % du volume.

Les débits sont ajustés par des débitmètres massiques.

La composition standard du mélange réactionnel est la suivante :
■ N₂O : 1 000 ppm
■ NO : 1 400 ppm
■ O₂ : 3%
■ H₂O : 15 %
■ N_{2:} jusqu'à 100 %

La teneur en NO ne correspond pas à celle que l'on observe dans le procédé des unités d'acide nitrique après le passage sur les toiles de platine et qui est d'environ 12 % du volume. Elle a été fixée à ce niveau pour des questions de sécurité. Cependant elle a été augmentée jusqu'à 5 000 ppm sans que l'on observe de modification dans les résultats obtenus ce qui montre que le procédé de l'invention ne dépend pas de la teneur en NO du mélange à traiter.

Les catalyseurs ont été fournis par la société Rhodia sous forme de poudre avec différents rapports ZrO₂/CeO₂, l'un d'eux comportant en plus de l'Yttrium.

On ne peut opérer avec de la poudre en raison de la perte de charge. Cela nécessite donc une mise en forme préalable (pastilles 5 mm de diamètre). Les pastilles sont ensuite concassées puis tamisées pour avoir des granules dont la dimension est comprise entre 0,5 et 1 mm.

Leurs compositions sont indiquées ci-après ainsi que leur surface spécifique. Les teneurs indiquées sont celles en oxydes CeO₂, ZrO₂ et Y₂O₃ en % poids, la somme de ces pourcentages étant naturellement égale à 100. Figurent également les surfaces spécifiques en m²/g mesurées selon la méthode BET pour les catalyseurs neufs ainsi que les surfaces spécifiques efficaces.

| **N°** | **CeO₂ %*** | **ZrO₂ %*** | **Y₂O₃ %*** | **Surface Spécifique** BET catalyseur neuf** | **Surface Spécifique efficace**** |
|---|---|---|---|---|---|
| I | 21,2 | 78,8 | | 72 | 30*** |
| II | 48,9 | 51,1 | | 74 | 29 |
| III | 60,4 | 36,4 | 3,2 | 123 | 37 |
| IV | 70,2 | 29,8 | | 135 | 26 |

| | | | | | |
|---|---|---|---|---|---|
| * exprimé en poids ** en m²/g ***mesurée après 24 h | | | | | |

Les catalyseurs sont mis en oeuvre sous forme de granules de 0,5 à 1 mm. Le volume de catalyseur mis en oeuvre est de 5 cm³ soit une hauteur de 10 mm.

Les essais ont été menés à une VVH de 50 000 h⁻¹ soit un débit total du gaz entrée de 250 Nl/h. La température a été par ailleurs fixée à 850°C.

Ci-après figure le niveau de conversion du N₂O en fonction du temps pour les quatre catalyseurs.

Les analyses de la teneur en N₂O en sortie de réacteur sont effectuées par infrarouge.

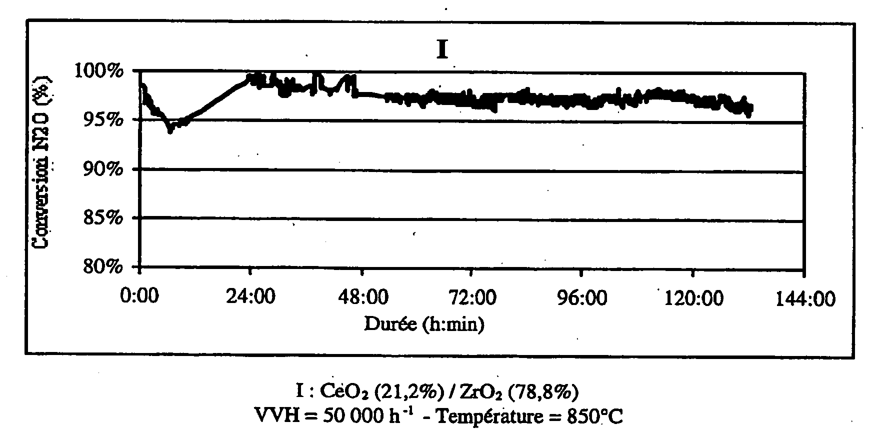

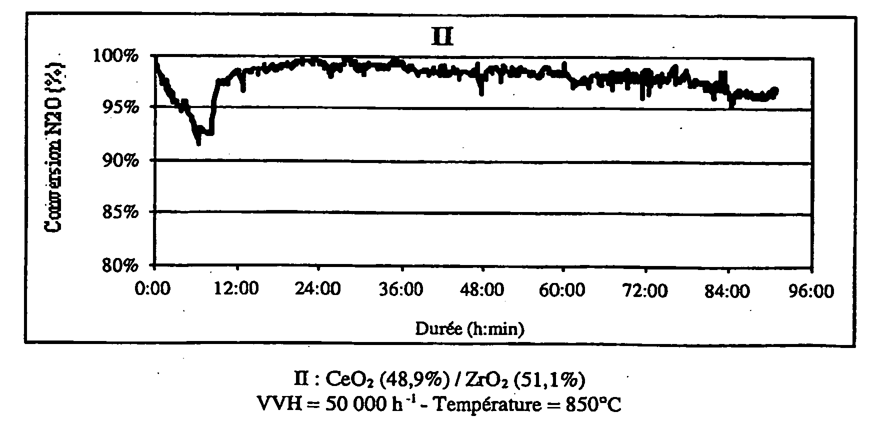

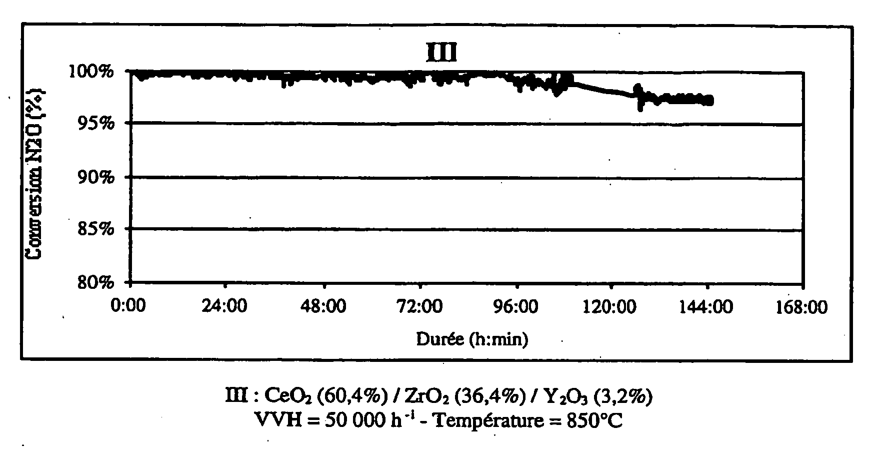

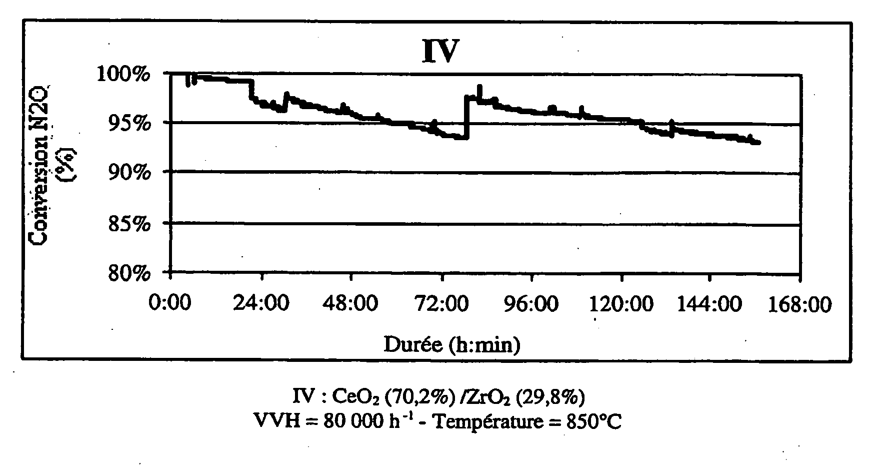

### EXEMPLE 5

Cet exemple illustre l'utilisation de catalyseurs selon l'invention dans un procédé de synthèse d'acide nitrique par oxydation à l'air d'ammoniac mis en oeuvre dans un réacteur pilote de diamètre effectif intérieur 100mm.

Les conditions opératoires sont les suivantes :
- un lit catalytique d'une hauteur de 50 mm constitué du catalyseur référencé ci-dessus III, est placé dans un panier adapté aux conditions de température disposé sous les toiles de platine constituées de fils de 0,060 mm de diamètre d'un alliage Platine/Rhodium à 5% de Rhodium,
- les conditions de fonctionnement du réacteur sont les suivantes :
   Concentration en ammoniac du mélange air ammoniac : 10.6% en volume
   Température du mélange du mélange air / ammoniac : 165°C
   Température des toiles de platine : 870°C
   Pression de fonctionnement : 5 bars absolus soit 500 K.Pascals
   Charge du réacteur : VVH de 80 000 h⁻¹.

Pour mesurer le taux d'élimination (ou abattement) du N₂O on mesure tout d'abord la quantité de N₂O produite dans les mêmes conditions opératoires mais en l'absence du lit catalytique. La quantité de N₂O produite dans ces conditions est de 1400 ppm.

En présence du lit catalytique on mesure la quantité de N₂O produite qui est de 200 ppm soit un abattement de 85%.

Le rendement d'oxydation de l'ammoniac en présence ou non du catalyseur est de 96,2% ce qui montre que le catalyseur est sans effet destructeur sur le NO produit au niveau des toiles de Platine.

## Revendications

1. Procédé de décomposition du N₂O en N₂ et O₂ réalisé à une température comprise entre 700 et 1000°C et à VVH élevée **caractérisé en ce qu'**il est mis en oeuvre en présence d'un catalyseur constitué d'un oxyde mixte de zirconium et de cérium se présentant majoritairement sous forme de solution solide.

2. Procédé selon la revendication 1 **caractérisé en ce que** le catalyseur présente une surface spécifique efficace supérieure à 25 m²/g

3. Procédé selon la revendication 1 **caractérisé en ce que** le rapport pondéral ZeO₂/CeO₂ au sein du catalyseur est compris entre 80/20 et 20/80 et de préférence entre 70/30 et 30/70.

4. Procédé selon l'une des revendications 1 à 3 **caractérisé en ce que** le catalyseur comprend également de l'Yttrium.

5. Procédé selon l'une des revendications 1 à 4 **caractérisé en ce que** la surface spécifique du catalyseur neuf est comprise entre 60 et 150 m²/g.

6. Procédé de décomposition en N₂ et O₂ du N₂O présent dans l'effluent d'une unité de production d'acide nitrique **caractérisé en ce que** l'on dispose sous les toiles de platine du réacteur d'oxydation de l'ammoniac, un catalyseur constitué d'un oxyde mixte de zirconium et de cérium sous forme de solution solide.

## Claims

1. Method for decomposition of N₂O to N₂ and O₂ carried out at a temperature between 700 and 1000°C and at high HSV, **characterized in that** it is implemented in the presence of a catalyst consisting of a zirconium cerium mixed oxide mainly in the form of a solid solution.

2. Method according to Claim 1, **characterized in that** the catalyst has an effective specific surface area above 25 m²/g.

3. Method according to Claim 1, **characterized in that** the ZeO_{2/}CeO₂ weight ratio in the catalyst is between 80/20 and 20/80 and preferably between 70/30 and 30/70.

4. Method according to one of Claims 1 to 3, **characterized in that** the catalyst further comprises yttrium.

5. Method according to one of Claims 1 to 4, **characterized in that** the specific surface area of the fresh catalyst is between 60 and 150 m²/g.

6. Method for decomposition, to N₂ and O₂, of the N₂O present in the effluent of a nitric acid production unit, **characterized in that** a catalyst is disposed under the platinum gauze of the ammonia oxidation reactor, the catalyst consisting of a zirconium cerium mixed oxide in the form of a solid solution.

## Patentansprüche

1. Verfahren zur Zersetzung von N₂O zu N₂ und O₂ bei einer Temperatur zwischen 700 und 1000°C und hoher Katalysatorbelastung, **dadurch gekennzeichnet, daß** es in Gegenwart eines Katalysators aus einem hauptsächlich in Form einer festen Lösung vorliegenden Zirconium-Cer-Mischoxid durchgeführt wird.

2. Verfahren nach Anspruch 1, **dadurch gekennzeichnet, daß** der Katalysator eine wirksame spezifische Oberfläche von mehr als 25 m²/g aufweist.

3. Verfahren nach Anspruch 1, **dadurch gekennzeichnet, daß** das ZeO₂/CeO₂-Gewichtsverhältnis im Katalysator zwischen 80/20 und 20/80 und vorzugsweise zwischen 70/30 und 30/70 liegt.

4. Verfahren nach einem der Ansprüche 1 bis 3, **dadurch gekennzeichnet, daß** der Katalysator außerdem Yttrium enthält.

5. Verfahren nach einem der Ansprüche 1 bis 4, **dadurch gekennzeichnet, daß** die spezifische Oberfläche des frischen Katalysators zwischen 60 und 150 m²/g liegt.

6. Verfahren zur Zersetzung von in einem Austragsstrom einer Salpetersäure-Produktionseinheit vorliegendem N₂O zu N₂ und O₂, **dadurch gekennzeichnet, daß** man unter den Platinnetzen des Ammoniakoxidationsreaktors einen Katalysator aus einem Zirconium-Cer-Mischoxid in Form einer festen Lösung anordnet.
